# EUROPÄISCHE PATENTSCHRIFT

(11) **EP 2 694 822 B1**
(45) Veröffentlichungstag und Bekanntmachung des Hinweises auf die Patenterteilung: **15.06.2016**
(21) Anmeldenummer: 12709531.3
(22) Anmeldetag: 12.03.2012
(51) Int. Cl.: F15B 13/08

(54) **MODULARE SCHALTVENTILANORDNUNG UND SCHALTSCHRANK MIT EINER SOLCHEN SCHALTVENTILANORDNUNG**
MODULAR SWITCHING VALVE ARRANGEMENT AND SWITCHGEAR CABINET COMPRISING SUCH A SWITCH VALVE ARRANGEMENT
ENSEMBLE DE SOUPAPES DE COMMUTATION MODULAIRE ET ARMOIRE DE COMMUTATION ÉQUIPÉE D'UN TEL DISPOSITIF DE SOUPAPE DE COMMUTATION

(30) Priorität: 01.04.2011 DE 202011004741 U
(43) Veröffentlichungstag der Anmeldung: 12.02.2014
(73) Patentinhaber: Bürkert Werke GmbH, 74653 Ingelfingen (DE)
(72) Erfinder: GÖTZELMANN, Joachim, 74677 Dörzbach (DE)
(74) Vertreter: Prinz & Partner mbB
(86) Internationale Anmeldenummer: PCT/EP2012/001098
(87) Internationale Veröffentlichungsnummer: WO 2012/130387

(56) Entgegenhaltungen:
- WO-A1-2009/127224
- US-A1- 2002 020 445

## Beschreibung

Die Erfindung betrifft eine modulare Schaltventilanordnung mit mehreren Schaltventilen, die benachbart zueinander angeordnet sind. Die Erfindung betrifft auch einen Schaltschrank mit einer solchen Schaltventilanordnung.

Ein Schaltschrank mit einer Schaltventilanordnung ist aus der WO 2009/127224 A1 bekannt. Die Schaltventilanordnung ist dort aus mehreren identischen Schaltventilen gebildet, die einander berührend angeordnet sind und mit Zugankern zu einem Block zusammengespannt werden. Dieser Block kann so in einem Schaltschrank angebracht werden, dass die Medienanschlüsse der Schaltventile durch eine Öffnung in einer Wand des Schaltschranks hindurch zugänglich sind. Zu diesem Zweck wird der Block so an der Wand des Schaltschranks angebracht, dass die Medienanschlüsse innerhalb der Aussparung liegen. Zur Abdichtung ist auf der der Wand zugeordneten Stirnseite des Blocks eine umlaufende Nut vorgesehen, in die eine Dichtung eingelegt werden kann.

Nachteilig bei der bekannten Schaltventilanordnung ist, dass Blöcke, die aus einer vergleichsweise großen Anzahl von Schaltventilen gebildet sind, nicht zuverlässig gegenüber der Wand des Schaltschranks abgedichtet werden können. Dies ist darauf zurückzuführen, dass der aus den Schaltventilen gebildete Block keine besonders hohe Stabilität besitzt, insbesondere wenn Schaltventile mit Kunststoffgehäusen verwendet werden.

Die Aufgabe der Erfindung besteht darin, eine Schaltventilanordnung der eingangs genannten Art dahin gehend weiterzubilden, dass auch Blöcke aus einer sehr großen Anzahl von Schaltventilen gebildet werden können, ohne dass die Anbringung der Schaltventilanordnung am Schaltschrank problematisch wird. Weiterhin soll die Schaltventilanordnung dahin gehend flexibel sein, dass die einzelnen Schaltventile mit geringem Aufwand ausgetauscht werden können.

Zur Lösung dieser Aufgabe ist erfindungsgemäß bei einer Schaltventilanordnung der eingangs genannten Art vorgesehen, dass jedes Schaltventil mindestens einen Medienanschluss aufweist, an dem ein Anschlussstutzen angebracht ist, und dass der Anschlussstutzen das entsprechende Schaltventil mit einer gemeinsamen Trägerplatte verspannt. Die Erfindung beruht auf dem Grundgedanken, die Medienanschlüsse dazu zu verwenden, die einzelnen Schaltventile an einer gemeinsamen Trägerplatte anzubringen. Auf diese Weise werden zwei Vorteile erhalten. Zum einen gibt es keinerlei Abdichtungsprobleme, da nicht eine Vielzahl von einzelnen Schaltventilen gegenüber der Wand des Schaltschranks abgedichtet werden muss, sondern eine durchgehende, stabile Trägerplatte. Zum anderen können die einzelnen Schaltventile unabhängig voneinander ausgetauscht werden, da lediglich der Anschlussstutzen gelöst werden muss, mit dem das entsprechende Schaltventil mit der Trägerplatte verspannt ist. Im Stand der Technik müssten dagegen, um ein einzelnes Schaltventil austauschen zu können, alle Zuganker von dem Block entfernt werden, der dadurch seine Integrität verlieren würde.

Vorzugsweise ist vorgesehen, dass der Anschlussstutzen ein Gewinde aufweist, das in das Schaltventil eingeschraubt ist. Auf diese Weise kann mit geringem Aufwand die nötige Vorspannkraft aufgebracht werden.

Vorzugsweise weist der Anschlussstutzen eine umlaufende Schulter auf, die sich an der Trägerplatte abstützt. Dies ermöglicht, die auftretenden Spannkräfte problemlos in die Trägerplatte einleiten zu können.

Zur Verbesserung der Abdichtung kann zwischen der Schulter und der Trägerplatte eine Dichtung angeordnet sein.

Vorzugsweise ist vorgesehen, dass die Trägerplatte auf der von den Schaltventilen abgewandten Seite eine Vertiefung aufweist, in der die Anschlussstutzen angeordnet sind. Diese Vertiefung gewährleistet, dass die Anschlussstutzen im vollständig montierten Zustand gar nicht oder nur geringfügig über die Außenfläche des Schaltschranks hervorstehen, sodass sich ein kompakter Aufbau ergibt.

Gemäß einer bevorzugten Ausführungsform der Erfindung ist vorgesehen, dass die Anschlussstutzen Teil einer Schnellanschlusskupplung sind, mit der ein Schlauch an den Anschlussstutzen angeschlossen werden kann. Dies erleichtert das Anschließen und gegebenenfalls auch das Trennen von Schläuchen an die Schaltventile bzw. von den Schaltventilen.

Zur Lösung der oben genannten Aufgabe ist erfindungsgemäß auch ein Schaltschrank mit einer solchen Schaltventilanordnung vorgesehen, wobei mindestens eine Montagewand für die Schaltventilanordnung vorgesehen ist, die mit einer Aussparung versehen ist, wobei die Aussparung von der Trägerplatte überdeckt ist. Dies ermöglicht es, die Schaltventilanordnung mit geringem Aufwand im Schaltschrank anzubringen, sodass die Anschlussstutzen von außen zugänglich sind. Der besondere Vorteil dieser Ausgestaltung gegenüber einer Vielzahl von herkömmlichen Schaltschränken besteht darin, dass die Schläuche zum Anschließen der Schaltventile nicht im Inneren des Schaltschranks angeordnet und dort geführt werden müssen.

Gemäß einer Ausgestaltung der Erfindung ist vorgesehen, dass die Trägerplatte auf der Innenseite der Montagewand angeordnet ist. Dies ermöglicht, die Aussparung in der Montagewand des Schaltschranks sehr klein auszuführen, da die zu einem Block zusammengefassten Schaltventile sich nicht durch die Aussparung hindurch erstrecken müssen.

Vorzugsweise ist vorgesehen, dass auf der Außenseite der Montagewand eine Blende angeordnet ist. Die Blende dient als Verstärkung der Montagewand des Schaltschranks, sodass diese sehr dünn ausgeführt werden kann und dennoch die notwendigen Spannkräfte zuverlässig aufgenommen werden können.

Die Erfindung wird nachfolgend anhand einer Ausführungsform beschrieben, die in den beigefügten Zeichnungen dargestellt ist. In diesen zeigen:
- Figur 1 schematisch einen erfindungsgemäßen Schaltschrank mit darin angebrachter Schaltventilanordnung;
- Figur 2 den Schaltschrank von Figur 1 in einer Explosionsansicht;
- Figur 3 schematisch eine Vorderansicht eines Schaltschranks mit darin angebrachter Schaltventilanordnung;
- Figur 4 schematisch eine Draufsicht auf die Schaltventilanordnung von Figur 3;
- Figur 5 einen Schnitt entlang der Linie V-V von Figur 3;
- Figur 6 einen Schnitt entlang der Ebene VI-VI von Figur 3; und
- Figur 7 eine Seitenansicht der Schaltventilanordnung von Figur 3.

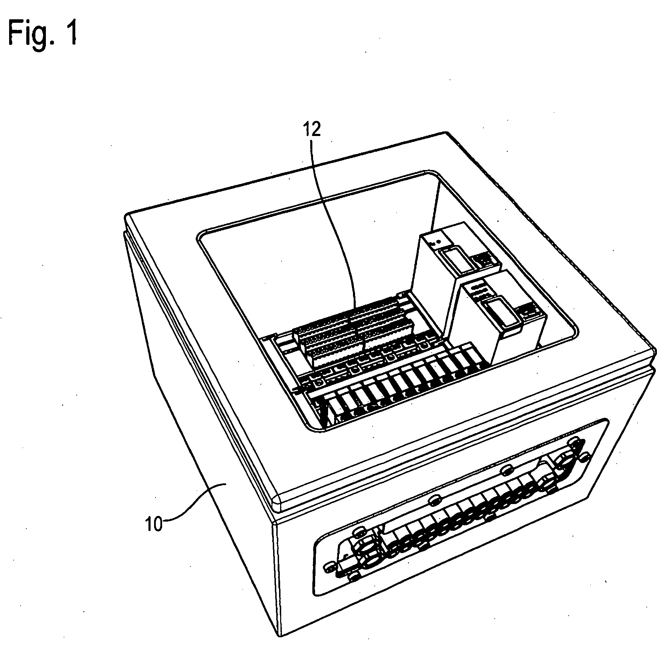

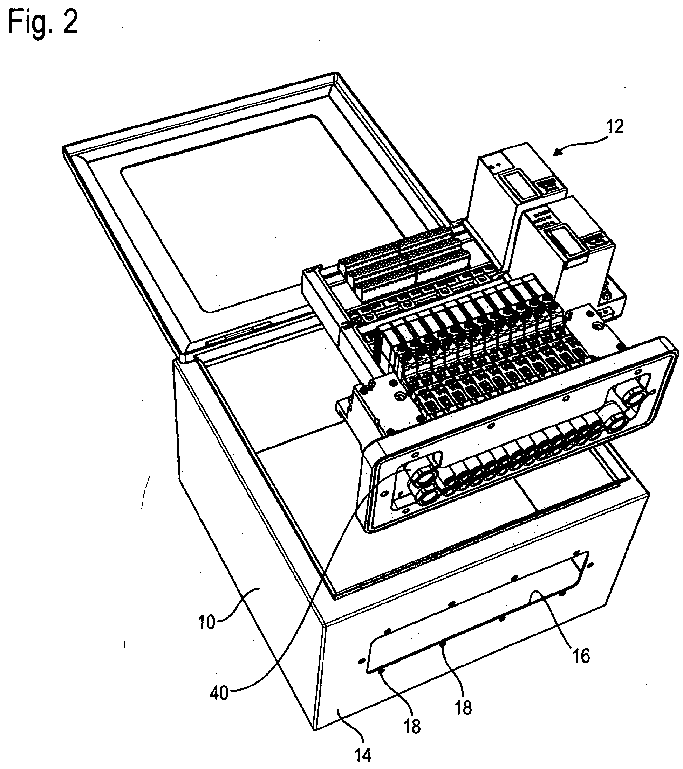

In Figur 1 ist ein Schaltschrank 10 gezeigt, in dessen Innenraum eine Schaltventilanordnung 12 (siehe auch Figur 2) angeordnet ist. Der Schaltschrank 10 weist eine Montagewand 14 auf, die mit einer Aussparung 16 versehen ist. Entlang dem Rand der Aussparung 16 sind mehrere Bohrungen 18 für Befestigungsschrauben vorgesehen.

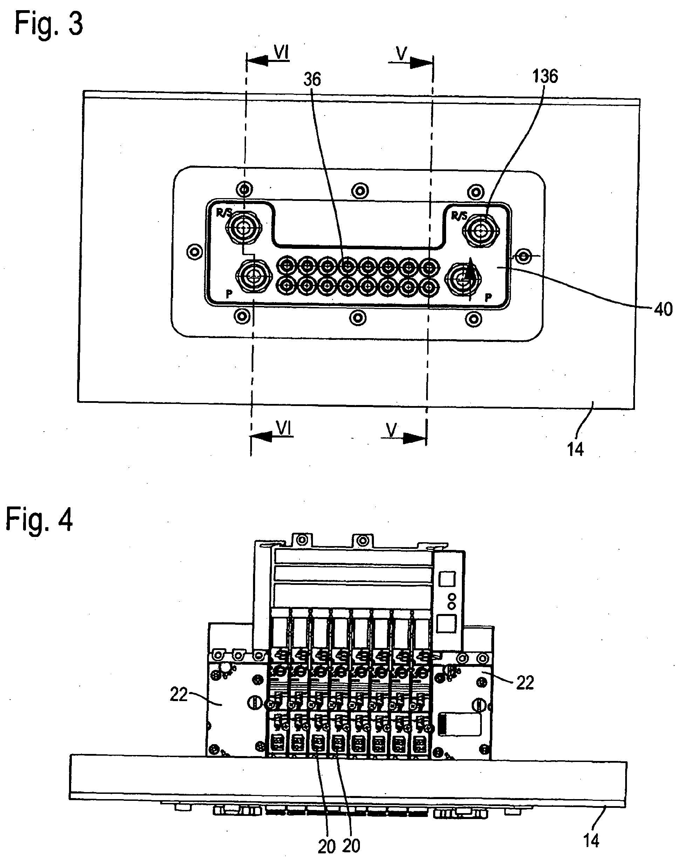

Die Schaltventilanordnung 12 besteht aus mehreren Schaltventilen 20 (siehe auch Figur 4), die einander mit den Seitenflächen berührend zu einem Block zusammengefasst sind. Die Schaltventile 20 weisen jeweils einen Antrieb und ein damit verbundenes Fluidgehäuse auf. Optional können mehrere Fluidgehäuse mit einem Fluidmodul fest verbunden sein, wobei das Fluidmodul der Medienzu- und abführung dient.

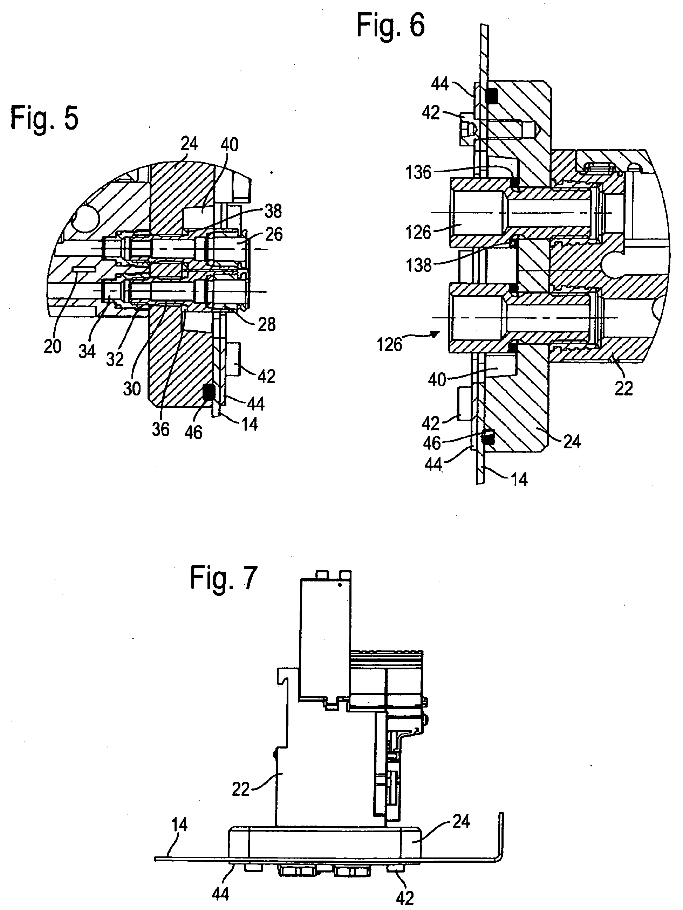

An zwei Außenseiten des so gebildeten Blocks sind Steuermodule 22 angeordnet. Die Schaltventile 20 zusammen mit den Steuermodulen 22 sind an einer Trägerplatte 24 (siehe auch die Figuren 5 und 6) angeordnet. Diese besteht aus Metall, beispielsweise Edelstahl oder einer Aluminiumlegierung, und hat eine Dicke, die sehr viel größer als die Dicke der Montagewand 14 ist. Auf diese Weise ergibt sich eine hohe mechanische Stabilität der Trägerplatte 24. Die Trägerplatte 24 kann alternativ auch aus anderen Materialien gefertigt sein, beispielsweise Kunststoff.

Zur Verbindung der Schaltventile 20 mit der Trägerplatte 24 sind, wie in Figur 5 gezeigt, Anschlussstutzen 26 vorgesehen, die eine außen liegende Anschlusshülse 28, einen Hals 30 und am von der Anschlusshülse 28 abgewandten Ende ein Gewinde 32 aufweisen. Das Gewinde 32 ist in ein Gegengewinde eingeschraubt, das an jeweils einem Medienanschluss 34 des Schaltventils 20 vorgesehen ist. Alternativ sind die Medienanschlüsse 34 im optionalen Fluidmodul angeordnet.

Zwischen der Anschlusshülse 28 und dem Hals 30 ist eine in radialer Richtung verlaufende Schulter 36 vorgesehen, die sich über eine zwischengelegte Dichtung 38 an der von den Schaltventilen 20 abgewandten Außenseite der Trägerplatte 24 abstützt. Die Anschlussstutzen 26 werden so weit in die Medienanschlüsse 34 der Schaltventile 20 eingeschraubt, dass diese fest mit der Trägerplatte 24 verspannt sind. Dabei ist ein mediendichter Durchgang von den Anschlussstutzen 26 zu den Medienanschlüssen 34 gewährleistet, sodass die Trägerplatte 24 hinsichtlich ihrer chemischen und elektrochemischen Eigenschaften nicht auf die von den Schaltventilen geschalteten Medien abgestimmt werden muss.

Zu den Steuermodulen 22 führen vergleichbare Anschlussstutzen 126, die über Schultern 136 die Steuermodule 22 mechanisch an der Trägerplatte 24 festspannen.

Die Anschlussstutzen 26, 126 gewährleisten, dass die Schaltventile 20 und die Steuermodule 22 mechanisch zuverlässig an der Trägerplatte 24 befestigt sind. Die Anschlussstutzen 26, 126 können dabei nach der Art von Passschrauben nahezu spielfrei in der Trägerplatte 24 geführt sein. Um zu verhindern, dass die Anschlussstutzen übermäßig weit nach außen vorstehen, ist die Trägerplatte auf der von den Schaltventilen 20 abgewandten Seite mit einer Vertiefung 40 versehen, auf deren Boden die Schultern 36, 136 aufliegen.

Die Trägerplatte 24 wird von der Innenseite des Schaltschranks 10 so an die Montagewand 14 angesetzt, dass die Anschlussstutzen 26, 126 innerhalb der Aussparung 16 liegen. Dann wird die Trägerplatte 24 mit Befestigungsschrauben 42 festgeschraubt, die sich durch die Bohrungen 18 erstrecken. Auf der Außenseite der Montagewand 14 ist dabei noch eine Blende 44 untergelegt, die zur mechanischen Verstärkung dient. Auf der Innenseite der Montagewand 14 ist eine Dichtung 46 zwischen der Trägerplatte 24 und der Montagewand angeordnet, die zur Abdichtung des Innenraums des Schaltschranks 10 dient.

Die Anschlussstutzen 26, 126 sind von der Außenseite des Schaltschranks aus zugänglich (siehe insbesondere Figur 1), sodass im Inneren des Schaltschranks keinerlei Schläuche geführt werden müssen. Dies führt zu einem kompakten und übersichtlichen Aufbau. Vorzugsweise sind die Anschlussstutzen 26 als Teil einer Schnellanschlusskupplung ausgeführt, sodass die Medienschläuche mit geringem Aufwand an die Schaltventile 20 angeschlossen werden können.

## Patentansprüche

1. Modulare Schaltventilanordnung (12) mit mehreren Schaltventilen (20), die benachbart zueinander angeordnet sind, **dadurch gekennzeichnet, dass** jedes Schaltventil (20) mindestens einen Medienanschluss (34) aufweist, an dem ein Anschlussstutzen (26) angebracht ist, und dass der Anschlussstutzen (26) das entsprechende Schaltventil (20) mit einer gemeinsamen Trägerplatte (24) verspannt.

2. Schaltventilanordnung nach Anspruch 1, **dadurch gekennzeichnet, dass** der Anschlussstutzen (26) ein Gewinde (32) aufweist, das in das Schaltventil (20) eingeschraubt ist.

3. Schaltventilanordnung nach Anspruch 1 oder Anspruch 2, **dadurch gekennzeichnet, dass** der Anschlussstutzen (26) eine umlaufende Schulter (36) aufweist, die sich an der Trägerplatte (24) abstützt.

4. Schaltventilanordnung nach Anspruch 3, **dadurch gekennzeichnet, dass** zwischen der Schulter (36) und der Trägerplatte (24) eine Dichtung (38) angeordnet ist.

5. Schaltventilanordnung nach einem der vorhergehenden Ansprüche, **dadurch gekennzeichnet, dass** die Trägerplatte (24) auf der von den Schaltventilen (20) abgewandten Seite eine Vertiefung (40) aufweist, in der die Anschlussstutzen (26) angeordnet sind.

6. Schaltventilanordnung nach einem der vorhergehenden Ansprüche, **dadurch gekennzeichnet, dass** der Anschlussstutzen (26) Teil einer Schnellanschlusskupplung ist, mit der ein Schlauch an den Anschlussstutzen (26) angeschlossen werden kann.

7. Schaltschrank (10) mit einer Schaltventilanordnung (12) nach einem der vorhergehenden Ansprüche, wobei mindestens eine Montagewand (14) für die Schaltventilanordnung (12) vorgesehen ist, die mit einer Aussparung (16) versehen ist, **dadurch gekennzeichnet, dass** die Aussparung (16) von der Trägerplatte (24) überdeckt ist.

8. Schaltschrank nach Anspruch 7, **dadurch gekennzeichnet, dass** die Trägerplatte (24) auf der Innenseite der Montagewand (14) angeordnet ist.

9. Schaltschrank nach Anspruch 8, **dadurch gekennzeichnet, dass** auf der Außenseite der Montagewand (14) eine Blende (44) angeordnet ist.

## Claims

1. A modular switching valve arrangement (12) comprising a plurality of switching valves (20) which are arranged adjacent to one another, **characterized in that** each switching valve (20) includes at least one media connection (34) which has a connecting piece (26) mounted thereto, and **in that** the connecting piece (26) braces the corresponding switching valve (20) with a shared carrier plate (24).

2. The switching valve arrangement according to claim 1, **characterized in that** the connecting piece (26) includes a thread (32) which is screwed in the switching valve (20).

3. The switching valve arrangement according to claim 1 or claim 2, **characterized in that** the connecting piece (26) includes a surrounding shoulder (36) which rests against the carrier plate (24).

4. The switching valve arrangement according to claim 3, **characterized in that** a seal (38) is arranged between the shoulder (36) and the carrier plate (24).

5. The switching valve arrangement according to any of the preceding claims, **characterized in that** on the side facing away from the switching valves (20), the carrier plate (24) includes a depression (40) having the connecting pieces (26) arranged therein.

6. The switching valve arrangement according to any of the preceding claims, **characterized in that** the connecting piece (26) is part of a quick-connect coupling by which a hose can be connected to the connecting piece (26).

7. A switch cabinet (10) comprising a switching valve arrangement (12) according to any of the preceding claims, at least one mounting wall (14) for the switching valve arrangement (12) being provided which is provided with a recess (16), **characterized in that** the recess (16) is covered by the carrier plate (24).

8. The switch cabinet according to claim 7, **characterized in that** the carrier plate (24) is arranged on the inside of the mounting wall (14).

9. The switch cabinet according to claim 8, **characterized in that** a faceplate (44) is arranged on the outside of the mounting wall (14).

## Revendications

1. Agencement (12) de soupapes de commande modulaire présentant plusieurs soupapes de commande (20) agencées adjacentes les unes par rapport aux autres, **caractérisé en ce que** chaque soupape de commande (20) présente au moins un raccord de fluide (34) sur lequel est monté un embout de raccordement (26), et **en ce que** l'embout de raccordement (26) serre la soupape de commande (20) correspondante sur une plaque support (24) commune.

2. Agencement de soupapes de commande selon la revendication 1, **caractérisé en ce que** l'embout de raccordement (26) présente un filetage (32) qui est vissé dans la soupape de commande (20).

3. Agencement de soupapes de commande selon la revendication 1 ou la revendication 2, **caractérisé en ce que** l'embout de raccordement (26) présente un épaulement périphérique (36) qui prend appui sur la plaque support (24).

4. Agencement de soupapes de commande selon la revendication 3, **caractérisé en ce qu'**un joint d'étanchéité (38) est agencé entre l'épaulement (36) et la plaque support (24).

5. Agencement de soupapes de commande selon l'une des revendications précédentes, **caractérisé en ce que** la plaque support (24) présente sur la face détournée des soupapes de commande (20) un évidement (40) dans lequel les embouts de raccordement (26) sont agencés.

6. Agencement de soupapes de commande selon l'une des revendications précédentes, **caractérisé en ce que** l'embout de raccordement (26) fait partie d'un accouplement à raccord rapide au moyen duquel un tuyau peut être raccordé à l'embout de raccordement (26).

7. Armoire de commande (10) comportant un agencement (12) de soupapes de commande selon l'une des revendications précédentes, au moins une paroi de montage (14) étant prévue pour l'agencement (12) de soupapes de commande, laquelle est pourvue d'un creux (16), **caractérisée en ce que** le creux (16) est recouvert de la plaque support (24).

8. Armoire de commande selon la revendication 7, **caractérisée en ce que** la plaque support (24) est agencée sur la face intérieure de la paroi de montage (14).

9. Armoire de commande selon la revendication 8, **caractérisée en ce qu'**un panneau (44) est agencé sur la face extérieure de la paroi de montage (14).
